# EUROPEAN PATENT APPLICATION

(11) **EP 4 432 642 A1**
(43) Date of publication of application: **18.09.2024**
(21) Application number: 23191914.3
(22) Date of filing: 17.08.2023
(51) Int. Cl.: H04N 1/54

(54) **COLOR PROCESSING SYSTEM, PROGRAM, AND COLOR PROCESSING METHOD**

(30) Priority: 15.03.2023 JP 2023040323
(71) Applicant: FUJIFILM Business Innovation Corp., Minato-ku Tokyo (JP)
(72) Inventor: YOKOHASHI, Mami, Yokohama-shi, Kanagawa (JP); YAMAUCHI, Kaoru, Yokohama-shi, Kanagawa (JP); IWAFUCHI, Toshihiro, Yokohama-shi, Kanagawa (JP); KUBO, Masahiko, Yokohama-shi, Kanagawa (JP)
(74) Representative: Kurig, Thomas

(57) **Abstract**

A color processing system includes one or plural processors configured to: acquire toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and generate a color gamut, which is composed of the base color toner and the special color toner, by using a vertex of an outline of the color gamut corresponding to the toner information.

## Description

### BACKGROUND OF THE INVENTION

### (i) Field of the Invention

The present invention relates to a color processing system, a program, and a color processing method.

### (ii) Description of Related Art

JP2011-10083A discloses a color processing apparatus in which a condition selection unit selects, among combinations of M color component values from which a target color is obtained, a combination of M color component values, where the sum of the M color component values is minimized, that is, a combination that satisfies limit set in advance, a combination of M color component values that is changed by the changing unit within a range that satisfies the limit is acquired for the selected combination of M color component values, and a number adjustment unit increases or decreases the number of obtained combinations of M color components according to a color region to obtain a set of color charts.

JP2014-123893A discloses a color conversion processing method in which a cmyk color conversion processing unit converts input image data into CMYK image data, a CMYKOG color conversion processing unit receives the CMYK image data, refers to a color conversion LUT, and converts the CMYK image data into a CMYKOG image signal, and a color conversion LUT creation unit arranges colors, which achieve the highest chroma by mixing a process color material and a special color material, in order of hue on a side corresponding to the highest chroma of an input cmyk space, allocates the colors according to a color difference between adjacent colors, and creates a color conversion LUT according to the allocation.

### SUMMARY OF THE INVENTION

In a case where a special color toner is added to a base color toner, a color gamut, which is composed of the base color toner and the special color toner, is generated. Here, in general, although color becomes darker as toners are layered according to the principle of subtractive color mixture, in a case where a fluorescent toner is used as a special color toner, the color may not darken even in a case where the toners are layered, and under the premise that the color becomes darker as toners are layered, an appropriate color gamut cannot be generated.

An object of the present invention is to generate an appropriate color gamut as a color gamut composed of a base color toner and a special color toner, in a case where a fluorescent toner is used as the special color toner.

According to a first aspect of the present disclosure, there is provided a color processing system including: one or a plurality of processors configured to: acquire toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and generate a color gamut, which is composed of the base color toner and the special color toner, by using a vertex of an outline of the color gamut corresponding to the toner information.

A second aspect of the present disclosure, there is provided the color processing system according to the first aspect, in which the vertex corresponding to the toner information may be the vertex of an outline in a dark portion of the color gamut.

A third aspect of the present disclosure, there is provided the color processing system according to the first or second aspect, in which the second condition may be a condition in which the special color toner is overprinted with respect to a specific base color toner that is the base color toner having a color of hue adjacent to hue of the special color toner.

A fourth aspect of the present disclosure, there is provided the color processing system according to the third aspect, in which the vertex corresponding to the toner information may be the vertex composed of a combination of colors that do not include a color of the special color toner and that include a color of the specific base color toner, in a case where both the first condition and the second condition are satisfied, and may be the vertex composed of a combination of colors that include the color of the special color toner and the color of the specific base color toner, in a case where at least one of the first condition or the second condition is not satisfied.

A fifth aspect of the present disclosure, there is provided the color processing system according to the third or fourth aspect, in which the one or the plurality of processors may be configured to: acquire colorimetric data of a color sample composed of the base color toner and the special color toner, as the toner information.

A sixth aspect of the present disclosure, there is provided the color processing system according to the fifth aspect, in which the one or the plurality of processors may be configured to: acquire the colorimetric data, of which brightness is increased as an amount of the special color toner is increased, as the toner information indicating that both the first condition and the second condition are satisfied.

A seventh aspect of the present disclosure, there is provided the color processing system according to any one of the third to sixth aspects, in which the one or the plurality of processors may be configured to: perform color gamut compression from another color gamut to the color gamut; and create a color conversion profile according to a creation condition corresponding to the toner information by using a result of the color gamut compression.

An eighth aspect of the present disclosure, there is provided the color processing system according to the seventh aspect, in which the creation condition corresponding to the toner information may be a condition in which an amount of the special color toner, which is used to reproduce a color of a point composed of a combination of colors that include a color of the special color toner and a color of the specific base color toner, is minimum, in a case where both the first condition and the second condition are satisfied, and may be a condition in which an amount of the special color toner, which is used to reproduce a color of a point composed of a combination of colors that do not include the color of the special color toner and that include the color of the specific base color toner, is maximum, in a case where at least one of the first condition or the second condition is not satisfied.

A ninth aspect of the present disclosure, there is provided the color processing system according to any one of the third to eighth aspects, in which the one or the plurality of processors may be configured to: control to output a color sample corresponding to the toner information.

A tenth aspect of the present disclosure, there is provided the color processing system according to the ninth aspect, in which the color sample corresponding to the toner information may be the color sample in which more colors in a region, which includes a point composed of a combination of colors that do not include a color of the special color toner and that include a color of the specific base color toner, are included, in a case where both the first condition and the second condition are satisfied, and may be the color sample in which more colors in a region, which includes a point composed of a combination of colors that include the color of the special color toner and the color of the specific base color toner, are included, in a case where at least one of the first condition or the second condition is not satisfied.

According to an eleventh aspect of the present disclosure, there is provided a color processing system including: one or a plurality of processors configured to: acquire information indicating whether or not a first condition, in which a special color toner to be added to a base color toner is a fluorescent toner, is satisfied and information indicating whether or not a second condition, which is related to a printing order of the base color toner and the special color toner with respect to a recording medium on which an image is formed, is satisfied; and reproduce a first color in a case where both the first condition and the second condition are satisfied and reproduce a second color, which is different from the first color, in a case where at least one of the first condition or the second condition is not satisfied, based on a specific color signal.

According to a twelfth aspect of the present disclosure, there is provided a program that causes a computer to implement: a function of acquiring toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and a function of generating a color gamut, which is composed of the base color toner and the special color toner, by using a vertex of an outline of the color gamut corresponding to the toner information.

According to a thirteenth aspect of the present disclosure, there is provided a program that causes a computer to implement: a function of acquiring information indicating whether or not a first condition, in which a special color toner to be added to a base color toner is a fluorescent toner, is satisfied and information indicating whether or not a second condition, which is related to a printing order of the base color toner and the special color toner with respect to a recording medium on which an image is formed, is satisfied; and a function of reproducing a first color in a case where both the first condition and the second condition are satisfied and reproducing a second color, which is different from the first color, in a case where at least one of the first condition or the second condition is not satisfied, based on a specific color signal.

According to a fourteenth aspect of the present disclosure, there is provided a color processing method including: acquiring toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and generating a color gamut, which is composed of the base color toner and the special color toner, by using a vertex of an outline of the color gamut corresponding to the toner information.

According to the first aspect of the present invention, an appropriate color gamut can be generated as a color gamut composed of the base color toner and the special color toner, in a case where the fluorescent toner is used as the special color toner.

According to the second aspect of the present invention, an appropriate vertex can be set as the vertex of the outline of the color gamut corresponding to the toner information.

According to the third aspect of the present invention, a more appropriate color gamut can be generated as a color gamut composed of the base color toner and the special color toner, in a case where the fluorescent toner is used as the special color toner.

According to the fourth aspect of the present invention, a more appropriate vertex can be set as the vertex of the outline of the color gamut corresponding to the toner information.

According to the fifth aspect of the present invention, time and effort required to input the toner information can be reduced.

According to the sixth aspect of the present invention, toner information can be easily acquired, which indicates that the special color toner is the fluorescent toner and is overprinted with respect to the specific base color toner.

According to the seventh aspect of the present invention, a color conversion profile corresponding to the toner information can be created.

According to the eighth aspect of the present invention, quality of the color conversion profile can be improved.

According to the ninth aspect of the present invention, a color sample corresponding to the toner information can be output.

According to the tenth aspect of the present invention, a color sample capable of efficiently improving the accuracy of the color conversion profile can be output.

According to the eleventh aspect of the present invention, appropriate color reproduction can be performed by using the base color toner and the special color toner in a case where the fluorescent toner is used as the special color toner.

According to the twelfth aspect of the present invention, an appropriate color gamut can be generated as a color gamut composed of the base color toner and the special color toner, in a case where the fluorescent toner is used as the special color toner.

According to the thirteenth aspect of the present invention, appropriate color reproduction can be performed by using the base color toner and the special color toner in a case where the fluorescent toner is used as the special color toner.

According to the fourteenth aspect of the present invention, an appropriate color gamut can be generated as a color gamut composed of the base color toner and the special color toner, in a case where the fluorescent toner is used as the special color toner.

### BRIEF DESCRIPTION OF THE DRAWINGS

Exemplary embodiment(s) of the present invention will be described in detail based on the following figures, wherein:
Figs. 1A and 1B are diagrams schematically showing a color gamut outline in a case where a fluorescent pink toner is added to a base color toner;
Fig. 2 is a diagram showing an example of a hardware configuration of an image processing apparatus according to the present exemplary embodiment;
Fig. 3 is a diagram showing an example of a mechanism of an image forming device according to the present exemplary embodiment;
Fig. 4 is a block diagram showing an example of a functional configuration of a profile creation device in the image processing apparatus;
Fig. 5 is a block diagram showing an example of a functional configuration of a color gamut creation unit in the profile creation device;
Fig. 6 is a diagram showing a first method in which a toner information acquisition unit acquires toner information;
Fig. 7 is a diagram showing a second method in which the toner information acquisition unit acquires the toner information;
Fig. 8 is a diagram showing a third method in which the toner information acquisition unit acquires the toner information;
Figs. 9A and 9B are diagrams showing whether a special color toner is overprinted or underprinted with respect to the base color toner in each printing order of the special color toner and the base color toner;
Fig. 10 is a flowchart showing an example of an operation of the color gamut creation unit in the present exemplary embodiment;
Figs. 11A and 11B are diagrams illustrating change in an amount of the special color toner in the vicinity of the color gamut outline in a case where the special color toner is added to the base color toner; and
Figs. 12A and 12B are diagrams illustrating patch densities in the vicinity of the color gamut outline in a case where the special color toner is added to the base color toner.

### DETAILED DESCRIPTION OF THE INVENTION

Hereinafter, an exemplary embodiment of the invention will be described in detail with reference to the accompanying drawings.

### [Outline of Present Exemplary Embodiment]

A color region capable of outputting with a color device such as a printer or a monitor is called a color gamut.

The color gamut can be created by connecting vertices of each color.

The present exemplary embodiment relates to creating a color gamut in a case of using a special color toner in addition to a base color toner of yellow (Y), magenta (M), cyan (C), and black (K), which are base colors for printing.

In general, according to the principle of subtractive color mixture, a vertex of a color gamut outline becomes darker as more toners are layered.

However, in a case of using a toner, which contains a fluorescence emitting component such as a fluorescent toner, as the special color toner, there is a case where the vertex of the color gamut outline may not darken even in a case where toners are layered, and under the premise that the color becomes darker as toners are layered, the maximum color gamut of a dark portion region cannot be acquired.

Therefore, in a case where the color gamut is calculated by such a method and a profile is created, there is a risk that colors to be reproducible is not used.

Further, even with the same fluorescent toner, in a case where the fluorescent toner is layered on top of the base color toner, the color becomes brighter due to the emission, but in a case where the fluorescent toner is layered under the base color toner, the color is blocked and emission does not occur. Therefore flexible change in the color gamut outline is required depending on the uses of the fluorescent toner.

The present exemplary embodiment provides a color processing system that acquires toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied and that generates a color gamut, which is composed of the base color toner and the special color toner, by using a vertex of an outline of the color gamut corresponding to the toner information.

In the color processing system, the vertex of the outline in any region of the color gamut may be set as a vertex corresponding to the toner information, and for example, the vertex of the outline in a dark portion of the color gamut is preferably set as a vertex corresponding to the toner information.

In other words, in the present exemplary embodiment, the color gamut is created by switching the vertex of the outline of the dark portion based on information on the type of the special color toner and information on the printing order. Here, the printing order is an order in which the special color toner is formed on a side farther or is formed on a side closer than the base color toner based on a recording medium such as paper on which an image is formed. Hereinafter, in a case where the special color toner is formed on a side farther from the recording medium than the base color toner, the special color toner is referred to as "overprinted" with respect to the base color toner. Further, in a case where the special color toner is formed on a side closer to the recording medium than the base color toner, the special color toner is referred to as "underprinted" with respect to the base color toner.

For example, consider a region in the vicinity of pink in a case where a pink (P) toner (hereinafter, referred to as a "fluorescent pink toner"), which is a fluorescent toner, is used as the special color toner. Here, in a case where the special color toner is the pink (P) toner, the base color toners, which are targets for determining overprint or underprint, are a cyan (C) toner and a magenta (M) toner. This is because the cyan (C) toner and the magenta (M) toner are base color toners having colors of hue adjacent to a color of the pink (P) toner.

That is, the second condition, which is related to the printing order of the base color toner and the special color toner with respect to the recording medium described above, may be a condition in which the special color toner is overprinted with respect to the specific base color toner that is a base color toner having a color of hue adjacent to the color of the special color toner.

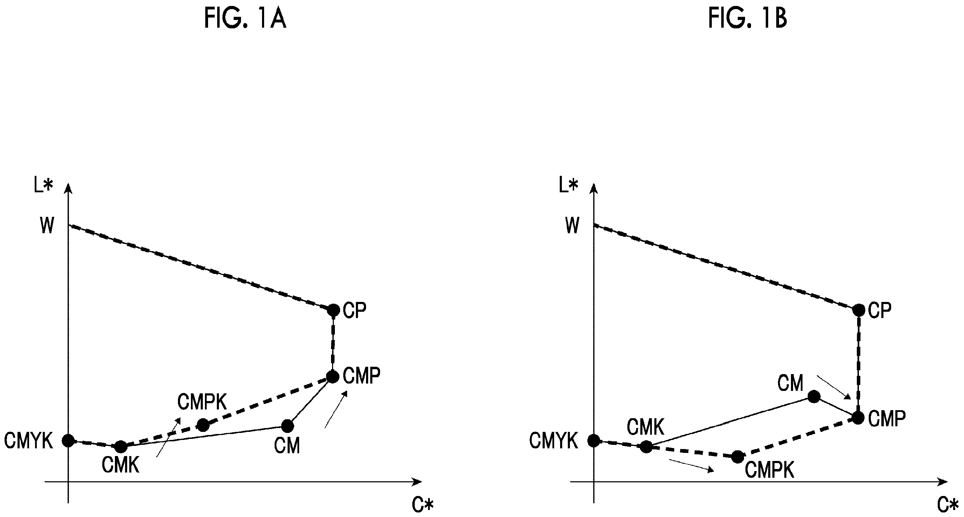

Figs. 1A and 1B are diagrams schematically showing a color gamut outline in a case where the special color toner is added to the base color toner. In the figure, a vertical axis L^{∗} indicates a brightness axis, a horizontal axis C^{∗} indicates a chroma axis, and W indicates white.

Fig. 1A shows the color gamut outline in a case where the fluorescent pink toner is layered on the base color toner as the special color toner. In this case, color becomes brighter in a case where the special color toner is added. In the figure, as indicated by an arrow, the color becomes brighter in a case where P is added to CM or a case where P is added to CMK. Therefore, in the present exemplary embodiment, as shown by a thin solid line, in the dark portion region, the color gamut outline is created by using a vertex composed of colors that do not include the special color. Specifically, the color gamut outline is created by connecting each of the vertices of W, CP, CMP, CM, CMK, and CMYK.

That is, the vertex of the outline of the color gamut corresponding to the toner information described above may be a vertex composed of a combination of colors that do not include a color of the special color toner and that include a color of the specific base color toner, in a case where both the first condition and the second condition are satisfied.

On the other hand, Fig. 1B shows a color gamut outline in a case where the fluorescent pink toner is layered under the base color toner as the special color toner. In this case, the color becomes dark in a case where the special color toner is added. In the figure, as indicated by an arrow, the color becomes dark in a case where P is added to CM or a case where P is added to CMK. Therefore, in the present exemplary embodiment, as shown by a thick broken line, in the dark portion region, the color gamut outline is created by using the vertex composed of colors that include the special color. Specifically, the color gamut outline is created by connecting each of the vertices of W, CP, CMP, CMPK, CMK, and CMYK.

In a case where a pink toner, which is other than the fluorescent toner, is used as the special color toner, the color gamut outline is created as shown in Fig. 1B regardless of whether the pink toner is layered on top of the base color toner or layered under the base color toner.

That is, the vertex of the outline of the color gamut corresponding to the toner information described above may be a vertex composed of a combination of colors that include the color of the special color toner and that include the color of the specific base color toner, in a case where at least one of the first condition or the second condition is not satisfied.

Here, the color processing system described above may be a single apparatus such as an image processing apparatus including an image scanning device, an image forming device, or an apparatus other than such an image processing apparatus, or may be composed of an image processing apparatus and other apparatuses. However, in the following description, an image processing apparatus will be described as an example as the color processing system.

### [Hardware Configuration of Image Processing Apparatus]

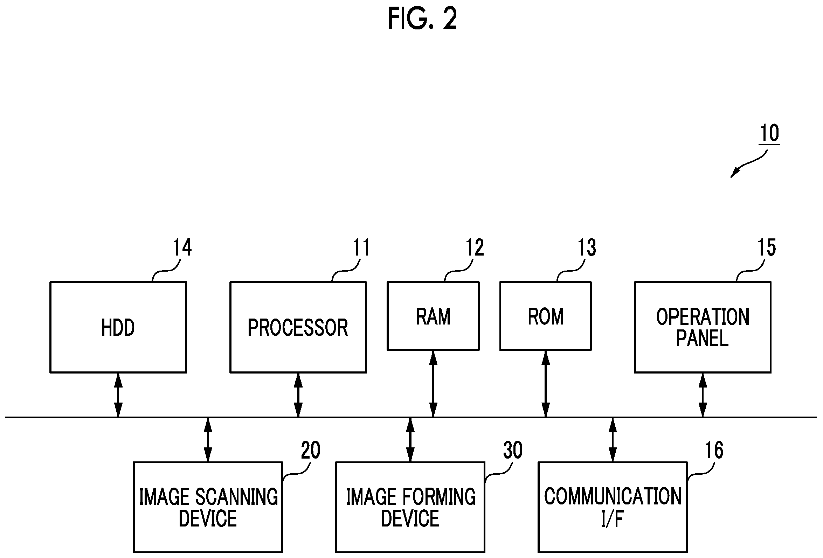

Fig. 2 is a diagram showing an example of a hardware configuration of an image processing apparatus 10 according to the present exemplary embodiment. As shown in the figure, the image processing apparatus 10 includes a processor 11, a random access memory (RAM) 12, a read only memory (ROM) 13, a hard disk drive (HDD) 14, an operation panel 15, a communication interface (hereinafter, referred to as a "communication I/F") 16, an image scanning device 20, and an image forming device 30.

The processor 11 implements each function described later by loading and executing various programs stored in the ROM 13 or the like into the RAM 12.

The RAM 12 is a memory used as a work memory of the processor 11.

The ROM 13 is a memory storing the various programs or the like executed by the processor 11.

The HDD 14 is, for example, a magnetic disk device that stores image data read by the image scanning device 20, image data used in image formation in the image forming device 30, or the like.

The operation panel 15 is, for example, a touch panel that displays various types of information and receives operation input from a user. Here, the operation panel 15 consists of a display on which various types of information are displayed and a position detection sheet that detects a position instructed by pointing means such as a finger and a stylus pen. Alternatively, a display and a keyboard may be used instead of the touch panel.

The communication I/F 16 transmits and receives various types of information to and from other apparatuses via a communication line.

The image scanning device 20 scans an image recorded on a recording medium such as paper. Here, the image scanning device 20 is, for example, a scanner, and may be one that employs a CCD method in which reflected light with respect to the light emitted from a light source to a document is reduced by a lens and received by charge coupled devices (CCDs), or a CIS method in which reflected light with respect to the light emitted from an LED light source to the document is received by using a contact image sensor (CIS) in order.

The image forming device 30 forms an image on a recording medium such as paper. Here, the image forming device 30 is, for example, a printer, and may be one that employs an electrophotographic method that forms an image by transferring toner adhered to a photoconductor to a recording medium or an ink jet method that ejects ink onto a recording medium to form an image.

### [Overall Configuration of Image Forming Device]

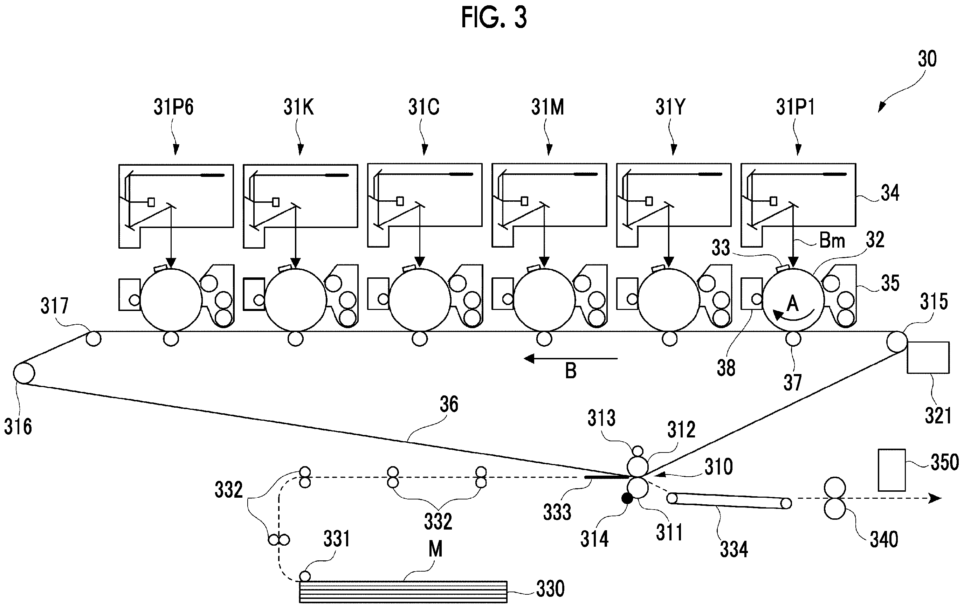

Fig. 3 is a diagram showing an example of a mechanism of the image forming device 30 according to the present exemplary embodiment. The image forming device 30 is a so-called tandem type device, and for example, includes: a plurality of image forming units 31 (31P1, 31Y, 31M, 31C, 31K, 31P6) in which each color component toner image is formed by electrophotographic method; an intermediate transfer belt 36 that sequentially transfers (primary transfer) and holds the each color component toner image formed by each of the image forming units 31; a secondary transfer device 310 that collectively transfers (secondary transfer) a superimposed image transferred on the intermediate transfer belt 36 to the recording medium M; a fixing device 340 that fixes the secondary transferred image on the recording medium M; and a colorimetric sensor 350 that measures a color-related feature quantity from the toner image fixed on the recording medium M.

In the image forming device 30, the two image forming units 31P1 and 31P6 that form a pink (P) toner image are provided as image forming units forming a tandem in addition to the image forming units 31Y, 31M, 31C, and 31K that form a base color toner image. In a case where the image forming units 31P1 and 31P6 are not distinguished, the image forming units 31P1 and 31P6 are referred to as an image forming unit 31P.

In the present exemplary embodiment, in each image forming unit 31 (31P1, 31Y, 31M, 31C, 31K, 31P6), electrophotographic devices such as a charger 33 for charging photoconductor drums 32, a laser exposure 34 for writing an electrostatic latent image on the photoconductor drum 32 (an exposure beam is indicated by symbol Bm in the figure), a developer 35 that accommodates each color component toner and visualizes the electrostatic latent image on the photoconductor drum 32 with a toner, a primary transfer roll 37 for transferring each color component toner image that is formed on the photoconductor drum 32 to the intermediate transfer belt 36, and a drum cleaner 38 for removing residual toner on the photoconductor drum 32 are arranged in sequence around the photoconductor drum 32 rotating in a direction of an arrow A. These image forming units 31 are arranged in order of pink (color P), yellow (color Y), magenta (color M), cyan (color C), black (color K), and pink (color P) from an upstream side of the intermediate transfer belt 36.

Further, the intermediate transfer belt 36 is configured to be rotatable with various rolls in a direction of an arrow B shown in the figure. A drive roll 315 that is driven by a motor (not shown) to rotate the intermediate transfer belt 36, a tension roll 316 having a function of applying constant tension to the intermediate transfer belt 36 and avoiding meandering of the intermediate transfer belt 36, an idle roll 317 that supports the intermediate transfer belt 36, and a backup roll 312 (described later) are used as various types of roles.

Further, a voltage having a reverse polarity to a charge polarity of the toner is applied to the primary transfer roll 37, and as a result, the toner images on each of the photoconductor drums 32 are sequentially and electrostatically attracted to the intermediate transfer belt 36, and a superimposed toner image is formed on the intermediate transfer belt 36.

Further, the secondary transfer device 310 includes a secondary transfer roll 311, which is arranged in pressure contact on a toner image holding surface side of the intermediate transfer belt 36, and a backup roll 312, which is disposed on a back surface side of the intermediate transfer belt 36 and serves as a counter electrode for the secondary transfer roll 311, and a metal feed roll 313 to which a secondary transfer bias is stably applied is disposed in contact with the backup roll 312. A brush roll 314 for removing stains adhering to the secondary transfer roll 311 is disposed in contact with the secondary transfer roll 311.

Further, a belt cleaner 321 for cleaning a surface of the intermediate transfer belt 36 after the secondary transfer, is provided on a downstream side of the secondary transfer roll 311.

Further, the present exemplary embodiment is provided with, as a medium transportation system, a medium accommodation unit 330 that accommodates the recording medium M, a pickup roll 331 that picks up and transports the recording media M that are stacked in the medium accommodation unit 330, a transporting roll 332 that transports the recording medium M fed out by the pickup roll 331, a medium transporting path 333 that feeds the recording medium M that is transported by the transporting roll 332 to a secondary transfer position by the secondary transfer device 310, and a transporting belt 334 that transports the recording medium M after the secondary transfer to the fixing device 340.

In the image forming device 30, although two image forming units 31 forming a pink (P) toner image are provided, only one image forming unit 31 forming a pink (P) toner image may be provided. In this case, determination of whether or not the pink toner is overprinted with respect to the base color toner can be performed, based on the order of the image forming units 31. In this case, the image forming unit 31, which is no longer used for forming the pink (P) toner image, may be used for forming a special color toner image other than pink, such as green (G), for example.

Further, in a case where two image forming units 31, which form the pink (P) toner image, are provided as in the image forming device 30, overprint and underprint may be switched by retracting one of the image forming units 31 from the intermediate transfer belt 36.

### [Functional Configuration of Profile Creation Device]

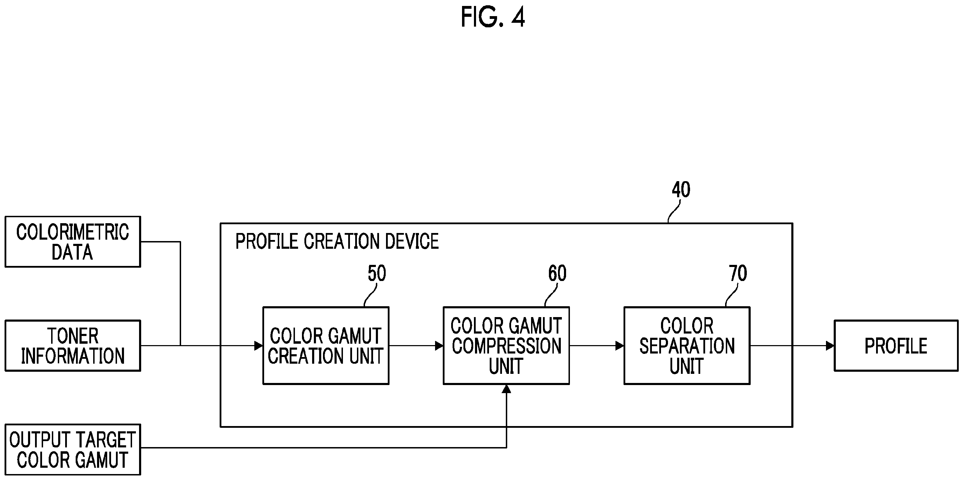

Fig. 4 is a block diagram showing an example of a functional configuration of a profile creation device 40 in the image processing apparatus 10 in Fig. 2. Here, the profile creation device 40 may be regarded as a device implemented by the processor 11 (refer to Fig. 2) of the image processing apparatus 10 reading a program for implementing each processing unit described later from the HDD 14 (refer to Fig. 2) into the RAM 12 (refer to Fig. 2) and executing the program. As shown in the figure, the profile creation device 40 includes a color gamut creation unit 50, a color gamut compression unit 60, and a color separation unit 70.

The color gamut creation unit 50 creates a color gamut based on the colorimetric data and the toner information. Here, although the details will be described later, the toner information includes toner type information indicating a type of the special color toner and toner order information indicating the printing order of the base color toner and the special color toner. The details of the method of creating the color gamut will also be described later.

The color gamut compression unit 60 performs color gamut compression that assigns a color in the color gamut of the image processing apparatus 10 with respect to a color in an output target color gamut that cannot be output by the image processing apparatus 10 in a device-independent Lab color space. Here, the output target color gamut is a color gamut of a monitor, for example, in a case where a color, which is given from outside and displayed on the monitor, is reproduced by the image processing apparatus 10. Further, the color gamut of the image processing apparatus 10 is a color gamut created by the color gamut creation unit 50.

In the present exemplary embodiment, the output target color gamut is used as an example of another color gamut, and a process of the color gamut compression unit 60 is performed as an example of a process of performing the color gamut compression to a color gamut generated from another color gamut.

The color separation unit 70 performs color separation to convert a color value in a Lab color space, which is assigned, by the color gamut compression unit 60, to a color within the output target color gamut that cannot be output by the image processing apparatus 10, into a color value in a device-dependent CMYKP color space. The color separation unit 70 creates a profile for color conversion by using the above color separation.

Accordingly, the image processing apparatus 10 performs different color reproduction in a case where the pink toner is the fluorescent toner and is overprinted with respect to the base color toner, and in other cases.

That is, the image processing apparatus 10 is an example of the color processing system in which, based on a specific color signal, a first color is reproduced in a case where both the first condition and the second condition are satisfied, and a second color that is different from the first color is reproduced in a case where at least one of the first condition or the second condition is not satisfied.

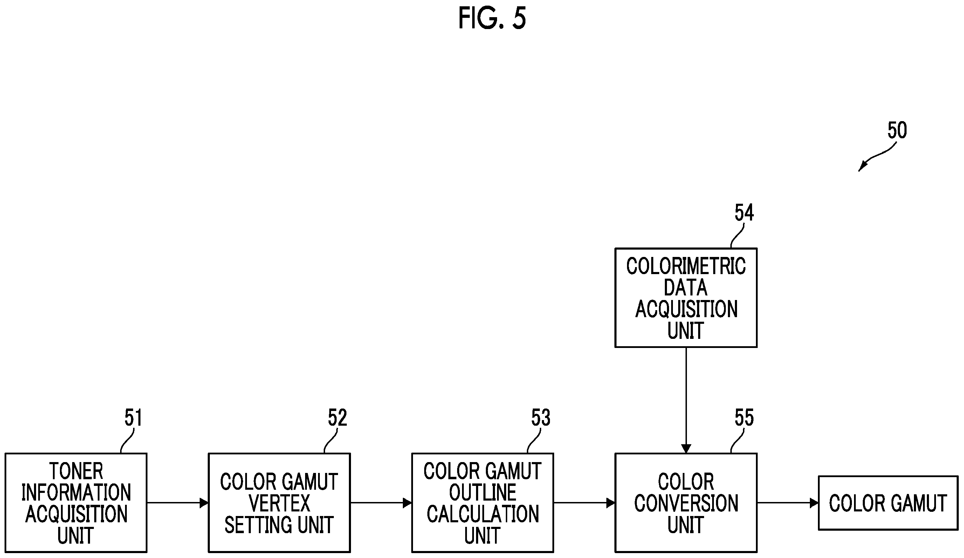

Fig. 5 is a block diagram showing an example of a functional configuration of the color gamut creation unit 50 in the profile creation device 40 in Fig. 4. As shown in the figure, the color gamut creation unit 50 includes a toner information acquisition unit 51, a color gamut vertex setting unit 52, a color gamut outline calculation unit 53, a colorimetric data acquisition unit 54, and a color conversion unit 55.

As described above, the toner information acquisition unit 51 acquires the toner information that includes the toner type information indicating a type of the special color toner and the toner order information indicating the printing order of the base color toner and the special color toner. Here, the toner type information includes information indicating the color of the special color toner and information indicating whether or not the special color toner is the fluorescent toner. Further, the toner order information includes information indicating whether or not the special color toner is overprinted with respect to the base color toner. The information indicating whether or not the special color toner is overprinted with respect to the base color toner may be information indicating whether or not the special color toner is overprinted with respect to the base color toner having hue adjacent to the special color.

In the present exemplary embodiment, a process of the toner information acquisition unit 51 is performed as an example of a process of acquiring the toner information indicating whether or not both the first condition, in which the special color toner to be added to the base color toner is the fluorescent toner, and the second condition, which is related to the printing order of the base color toner and the special color toner with respect to the recording medium on which an image is formed, are satisfied.

Further, in the present exemplary embodiment, the process of the toner information acquisition unit 51 is performed as an example of a process of acquiring the information, which indicates whether or not the first condition in which the special color toner to be added to the base color toner is the fluorescent toner is satisfied, and the information, which indicates whether or not the second condition that is related to the printing order of the base color toner and the special color toner with respect to the recording medium on which an image is formed is satisfied.

Further, in the present exemplary embodiment, as an example of the second condition, a condition in which the special color toner is overprinted with respect to the specific base color toner that is the base color toner having a color of hue adjacent to hue of the special color toner is used.

The color gamut vertex setting unit 52 sets the vertex of the color gamut outline based on the toner information acquired by the toner information acquisition unit 51.

Specifically, the color gamut vertex setting unit 52 determines whether or not the special color toner is the fluorescent toner by referring to the toner type information and determines whether or not the special color toner is overprinted with respect to the base color toner of hue adjacent to the special color by referring to the toner order information.

Here, in a case where determination is made that the special color toner is the fluorescent toner and the special color toner is overprinted with respect to the base color toner having hue adjacent to the special color, the color gamut vertex setting unit 52 sets the vertex of the color gamut outline as shown in Fig. 1A. That is, the color gamut vertex setting unit 52 sets the vertex, as the vertex of the color gamut outline, composed of a combination of colors that do not include the special color in the dark portion region and that include the base color having hue adjacent to the special color.

Further, in a case where determination is made that the special color toner is not the fluorescent toner or the special color toner is not overprinted with respect to the base color toner having hue adjacent to the special color, the color gamut vertex setting unit 52 sets the vertex of the color gamut outline as shown in Fig. 1B. That is, the color gamut vertex setting unit 52 sets the vertex, as the vertex of the color gamut outline, composed of a combination of colors that include the base color having hue adjacent to the special color.

In the present exemplary embodiment, a process of the color gamut vertex setting unit 52 is performed as an example of a process of setting the vertex of the color gamut outline corresponding to the toner information. Here, the vertex of the color gamut outline corresponding to the toner information may be the vertex of the outline in the dark portion of the color gamut.

Further, in the present exemplary embodiment, the process of the color gamut vertex setting unit 52 is performed as an example of a process of setting the vertex, which is composed of a combination of colors that do not include the color of the special color toner and that include the color of the specific base color toner, in a case where both the first condition and the second condition are satisfied, and of setting the vertex, which is composed of a combination of colors that include the color of the special color toner and the color of the specific base color toner, in a case where at least one of the first condition or the second condition is not satisfied, as the vertex of the color gamut outline corresponding to the toner information.

The color gamut outline calculation unit 53 calculates the color gamut outline by connecting the vertices set by the color gamut vertex setting unit 52.

The colorimetric data acquisition unit 54 acquires the colorimetric data, which is a result of colorimetry of the color output by the image processing apparatus 10. The colorimetric data may be, for example, data in which a color value in a device-dependent CMYKP color space, which is used in a case where the image processing apparatus 10 outputs a color, and a color value in a device-independent Lab color space, which is the result of colorimetry of the color, are associated with each other.

The color conversion unit 55 converts the color value in the CMYKP color space of the color gamut outline calculated by the color gamut outline calculation unit 53 into a color value in the Lab color space by using the colorimetric data acquired by the colorimetric data acquisition unit 54. As a result, the color gamut of the image processing apparatus 10 is created.

In the present exemplary embodiment, processes of the color gamut outline calculation unit 53 and the color conversion unit 55 are performed as an example of a process of generating the color gamut, which is composed of the base color toner and the special color toner, by using the vertex of the color gamut outline corresponding to the toner information.

Here, although the color gamut creation unit 50 in Fig. 5 is used in a case where the profile creation device 40 in Fig. 4 creates a profile, the color gamut creation unit 50 in Fig. 5 may be used at other time.

Here, a method of acquiring the toner information by the toner information acquisition unit 51 will be described.

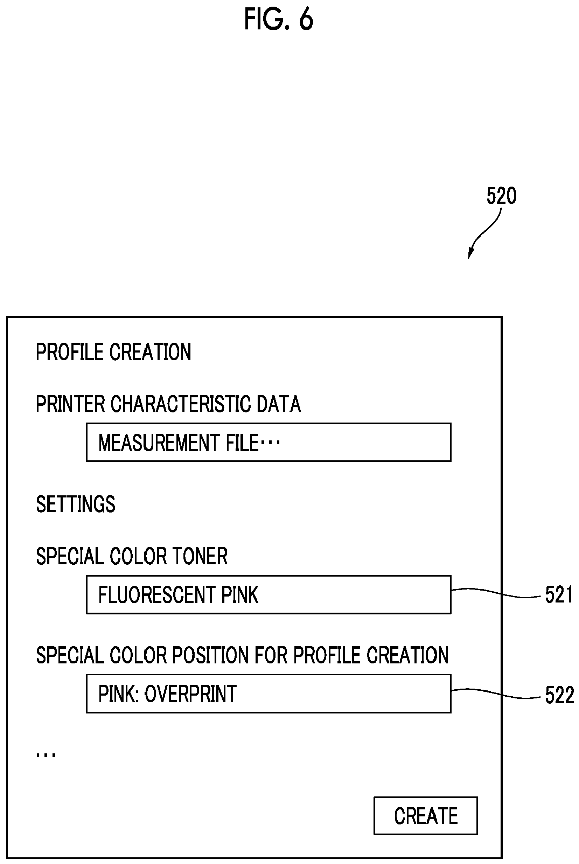

Fig. 6 is a diagram showing a first method in which the toner information acquisition unit 51 acquires the toner information. In the first method, the toner information acquisition unit 51 acquires the toner information from a profile creation UI 520 displayed on the operation panel 15 (see Fig. 2). As shown in the figure, the profile creation UI 520 includes a toner type information input field 521 and a toner order information input field 522. In the figure, since "fluorescent pink" is input in the toner type information input field 521, the toner information acquisition unit 51 acquires information indicating that the special color toner is the fluorescent pink toner, as the toner type information. Further, since "pink: overprint" is input in the toner order information input field 522, the toner information acquisition unit 51 acquires information indicating that the special color toner is overprinted with respect to the base color toner, as the toner order information.

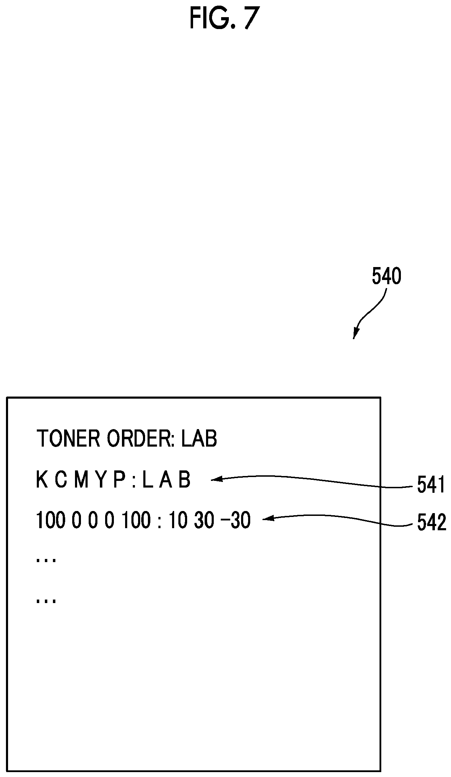

Fig. 7 is a diagram showing a second method in which the toner information acquisition unit 51 acquires the toner information. In the second method, the toner information acquisition unit 51 acquires the toner information that is embedded in the colorimetric data 540 obtained by measuring the color of a chart output by the image processing apparatus 10. As shown in the figure, the colorimetric data 540 includes an element description 541 and a color value description 542. The element description 541 is a description of a color element. In the element description 541, a portion corresponding to the toner order indicates whether or not the special color toner is overprinted with respect to the base color toner, with a left side as an overprint side and a right side as an underprint side. In the figure, since the element description 541 is described as "K C M Y P", the toner information acquisition unit 51 acquires information indicating that the special color toner is not overprinted with respect to the base color toner, as the toner order information.

In addition, the toner information acquisition unit 51 may acquire the toner type information from the colorimetric data 540. For example, in a case where the information, which indicates that the special color toner is overprinted with respect to the base color toner, is acquired as the toner order information, the toner information acquisition unit 51 can acquire the toner type information as follows. That is, the toner information acquisition unit 51 compares a P value and an L value in a case where a K value, a C value, an M value, and a Y value of the color value description 542 of the colorimetric data 540 are the same. In a case where the L value is increased as the P value is increased, the toner information acquisition unit 51 acquires the information indicating that the special color toner is the fluorescent toner, as the toner type information. Further, in a case where the L value is decreased as the P value is increased, the toner information acquisition unit 51 acquires the information indicating that the special color toner is not the fluorescent toner, as the toner type information.

In this case, the process of the toner information acquisition unit 51 is an example of a process of acquiring the colorimetric data of a color sample composed of the base color toner and the special color toner, as the toner information.

Further, the process of the toner information acquisition unit 51 is an example of a process of acquiring the colorimetric data, of which brightness is increased as an amount of the special color toner is increased, as the toner information indicating that both the first condition and the second condition are satisfied.

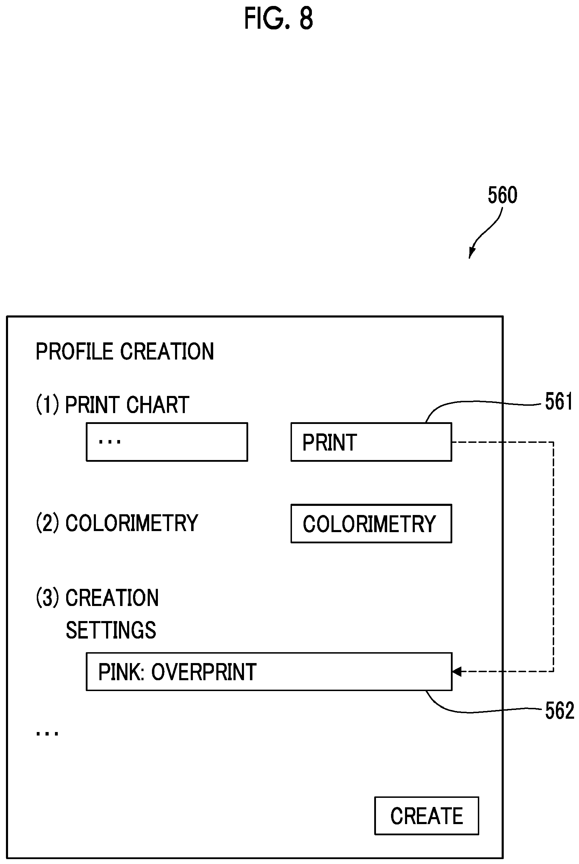

Fig. 8 is a diagram showing a third method in which the toner information acquisition unit 51 acquires the toner information. In the third method, the toner information acquisition unit 51 acquires the toner information from a profile creation UI 560 displayed on the operation panel 15 (see Fig. 2). As shown in the figure, the profile creation UI 560 includes a print button 561 and a toner order information input field 562. In the profile creation UI 560, an assumption is made that the user presses the print button 561 in order to output the chart for base data. For example, based on order or retraction state information of the image forming units 31 (see Fig. 3) stored in the RAM 12 (see Fig. 2), the toner order information is input in the toner order information input field 562 without user's operation as indicated by a broken line arrow. In the figure, since "pink: overprint" is input in the toner order information input field 562, the toner information acquisition unit 51 acquires information indicating that the special color toner is overprinted with respect to the base color toner, as the toner order information.

Further, here, the printing order of the toner will be specifically described.

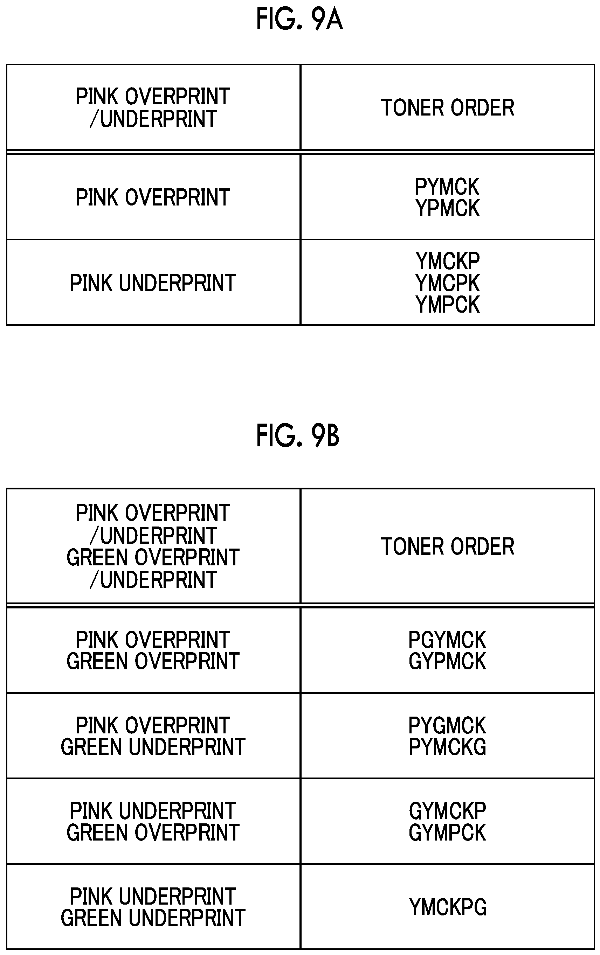

Figs. 9A and 9B are diagrams showing whether the special color toner is overprinted or underprinted with respect to the base color toner in each toner order of the special color toner and the base color toner. In a toner order field, an assumption is made that the left side is a side far from the recording medium and the right side is a side close to the recording medium. Further, these are merely examples, and do not cover all toner orders.

Fig. 9A shows a case where the pink (P) toner is added to the base color toner. The base colors having hue adjacent to pink (P) are cyan (C) and magenta (M).

Therefore, "PYMCK" and "YPMCK" on which pink (P) is on the side farther from the recording medium than both cyan (C) and magenta (M) are set as pink overprint.

Further, "YMCKP", "YMCPK", and "YMPCK" on which pink (P) is on the side closer to the recording medium than at least one of cyan (C) or magenta (M) are set as pink underprint.

Fig. 9B shows a case where the pink (P) toner and the green (G) toner are added to the base color toner. The base colors having hue adjacent to pink (P) are cyan (C) and magenta (M), and the base colors having hue adjacent to green (G) are cyan (C) and yellow (Y).

Therefore, "PGYMCK" and "GYPMCK", on which pink (P) is on the side farther from the recording medium than both cyan (C) and magenta (M), and green (G) is on the side farther from the recording medium than both cyan (C) and yellow (Y), are set as pink overprint and green overprint.

Further, "PYGMCK" and "PYMCKG", on which pink (P) is on the side farther from the recording medium than both cyan (C) and magenta (M), and green (G) is on the side closer to the recording medium than at least one of cyan (C) or yellow (Y), are set as pink overprint and green underprint.

Therefore, "GYMCKP" and "GYMPCK", on which pink (P) is on the side closer to the recording medium than at least one of cyan (C) or magenta (M), and green (G) is on the side farther from the recording medium than both cyan (C) and yellow (Y), are set as pink underprint and green overprint.

Further, "YMCKPG", on which pink (P) is on the side closer to the recording medium than at least one of cyan (C) or magenta (M), and green (G) is on the side closer to the recording medium than at least one of cyan (C) or yellow (Y), are set as pink underprint and green underprint.

### [Example of Operation of Color Gamut Creation Unit]

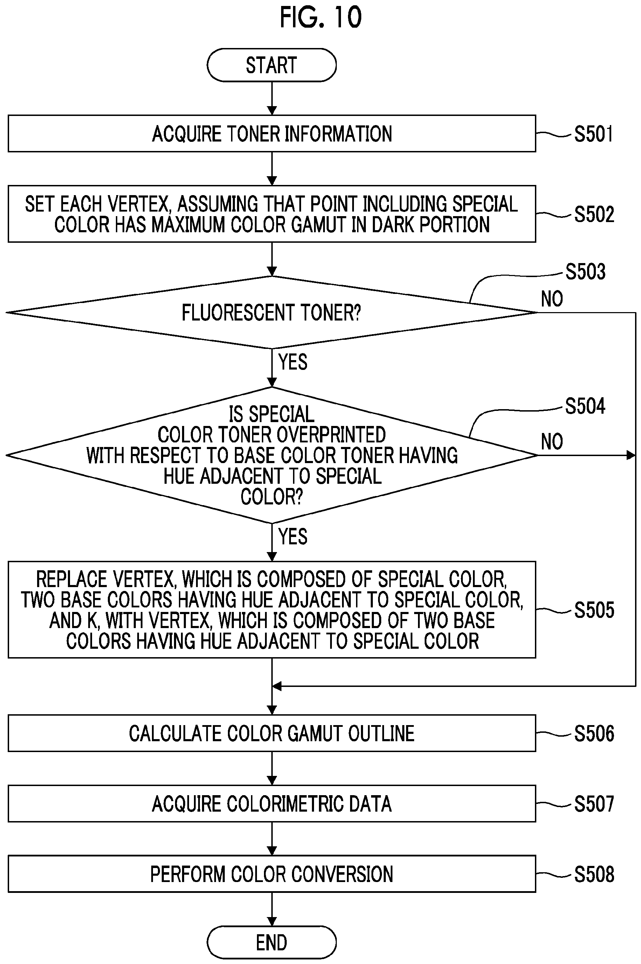

Fig. 10 is a flowchart showing an example of an operation of the color gamut creation unit 50 according to the present exemplary embodiment.

As shown in the figure, in the color gamut creation unit 50, first, the toner information acquisition unit 51 acquires the toner information that includes the toner type information and the toner order information (step S501).

Next, the color gamut vertex setting unit 52 sets each vertex of the color gamut outline, assuming that a point including the special color has a maximum color gamut in the dark portion (step S502). Here, for example, the color gamut vertex setting unit 52 may set each vertex by using the color value that is given in advance for the base color, and by using the color information of the special color included in the toner type information acquired in step S501 for the special color.

Next, the color gamut vertex setting unit 52 determines whether or not the special color toner is the fluorescent toner based on the toner type information acquired in step S501 (step S503).

In a case where determination is made that the special color toner is not the fluorescent toner in step S503, the color gamut vertex setting unit 52 advances the process to step S506.

In a case where determination is made that the special color toner is the fluorescent toner in step S503, the color gamut vertex setting unit 52 determines whether or not the special color toner is overprinted with respect to the base color toner having hue adjacent to the special color based on the toner order information acquired in step S501 (step S504).

In step S504, in a case where determination is made that the special color toner is not overprinted with respect to the base color toner having hue adjacent to the special color, the color gamut vertex setting unit 52 advances the process to step S506.

In a case where determination is made that the special color toner is overprinted with respect to the base color toner having hue adjacent to the special color in step S504, the color gamut vertex setting unit 52 replaces a vertex, which is composed of the special color, two base colors having hue adjacent to the special color, and black (K), with a vertex, which is composed of two base colors having hue adj acent to the special color (step S505). That is, in a case where the color is brighter with the special color, the color gamut vertex setting unit 52 replaces the vertex in the dark portion with a point that does not include the special color. Thereafter, the color gamut vertex setting unit 52 advances the process to step S506.

After that, the color gamut outline calculation unit 53 calculates the color gamut outline by using the vertex set in step S502, or by using the vertex set in step S502 and the vertex after being replaced in step S505 (step S506).

Next, the colorimetric data acquisition unit 54 acquires the colorimetric data (step S507).

Finally, the color conversion unit 55 performs color conversion based on the color gamut outline calculated in step S506 and the colorimetric data acquired in step S507 (step S508). Accordingly, the color gamut is created.

In a case where there are a plurality of special colors, for example, the processes of steps S502 to S505 may be repeated for the number of special colors.

### [First Modification Example]

In the first modification example, the color gamut creation unit 50 switches the color gamuts, and the color separation unit 70 switches the profile creation conditions to improve quality of the color conversion profile.

Specifically, by switching a ratio of the amount of the special color toner used by the color separation unit 70 in a case of performing the color separation, sudden changes in amount of the special color toner is prevented and gradation is maintained. Here, the ratio of the amount of the special color toner is a ratio of the amount of the special color toner in a case where a part of CMYK is replaced with a special color to reproduce the same color.

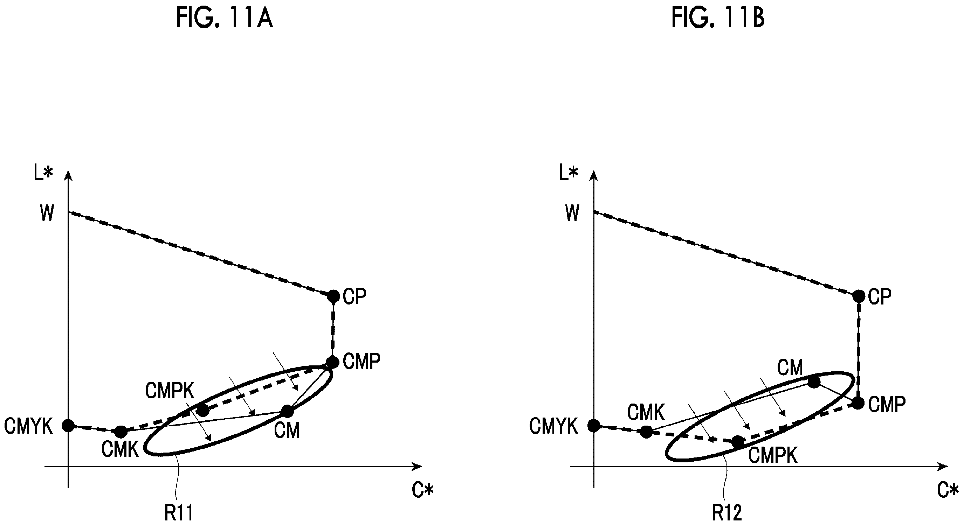

Figs. 11A and 11B are diagrams illustrating change in an amount of the special color toner in the vicinity of the color gamut outline in a case where the special color toner is added to the base color toner.

Fig. 11A shows the color gamut outline in a case where the fluorescent pink toner is layered on the base color toner as the special color toner. In this case, in a region R11, in a case where the ratio of the amount of the special color toner of a surface, which is represented by a thick broken line, is maximized, the amount of pink is sharply decreased in a direction indicated by the arrow, and a difference in level of gradation occurs. Therefore, in the first modification example, in the region R11, the amount of pink is gradually changed in the direction indicated by the arrow by minimizing the ratio of the amount of the special color toner of the surface represented by the thick broken line.

At this time, for example, although the ratio of the amount of the special color toner is minimized over the entire region connecting the CMP, CMPK, and CMK, the ratio of the amount of the special color toner may be minimized only in a part of this region. For example, the ratio of the amount of the special color toner may be minimized only for CMPK that contains the special color toner.

In this case, the process of the color separation unit 70 is an example of a process of creating a color conversion profile according to the creation condition corresponding to the toner information by using the result of the color gamut compression.

Further, the process of the color separation unit 70 is an example of a process of creating a color conversion profile according to the creation condition in which the amount of the special color toner, which is used to reproduce a color of a point that is composed of a combination of colors including the color of the special color toner and the color of the specific base color toner, is the minimum, in a case where both the first condition and the second condition are satisfied.

On the other hand, Fig. 11B shows the color gamut outline in a case where the fluorescent pink toner is layered under the base color toner as the special color toner. In this case, in a region R12, in a case where the ratio of the amount of the special color toner of the surface, which is represented by a thin solid line, is minimized, the amount of pink is sharply increased in a direction indicated by the arrow, and a difference in level of gradation occurs. Therefore, in the first modification example, in the region R12, the amount of pink is gradually changed in the direction indicated by the arrow by maximizing the ratio of the amount of the special color toner of the surface represented by the thin solid line.

At this time, for example, although the ratio of the amount of the special color toner is maximized over the entire region connecting the CMP, CM, and CMK, the ratio of the amount of the special color toner may be minimized only in a part of this region. For example, the ratio of the amount of the special color toner may be maximized only for CM that does not contain the special color toner.

Even in a case where the special color toner is not the fluorescent toner, the concept of Fig. 11B may be applied.

In this case, the process of the color separation unit 70 is an example of a process of creating a color conversion profile according to the creation condition corresponding to the toner information by using the result of the color gamut compression.

Further, the process of the color separation unit 70 is an example of a process of creating a color conversion profile according to the creation condition in which the amount of the special color toner, which is used to reproduce a color of a point that is composed of a combination of colors that do not include the color of the special color toner and that include the color of the specific base color toner, is the maximum, in a case where at least one of the first condition or the second condition is not satisfied.

### [Second Modification Example]

In the present exemplary embodiment, since the color gamut can be determined based on the printing order of the toner, a color gamut creation method can be changed without measuring the color of the chart.

In a multicolor profiler such as in the present exemplary embodiment, the number of patches used to create a profile is very large, and there is a demand for reducing the number of patches as much as possible.

Since the color tends to fluctuate in the region in the vicinity of the dark portion outline, selecting a chart from which more detailed base data for that region can be obtained can increase the accuracy of color prediction and improve the accuracy of the profile.

Therefore, in the second modification example, the accuracy of the profile is improved with the minimum number of required patches by determining the combination of colors to be the outline before printing the chart and adopting a patch set that is highly necessary.

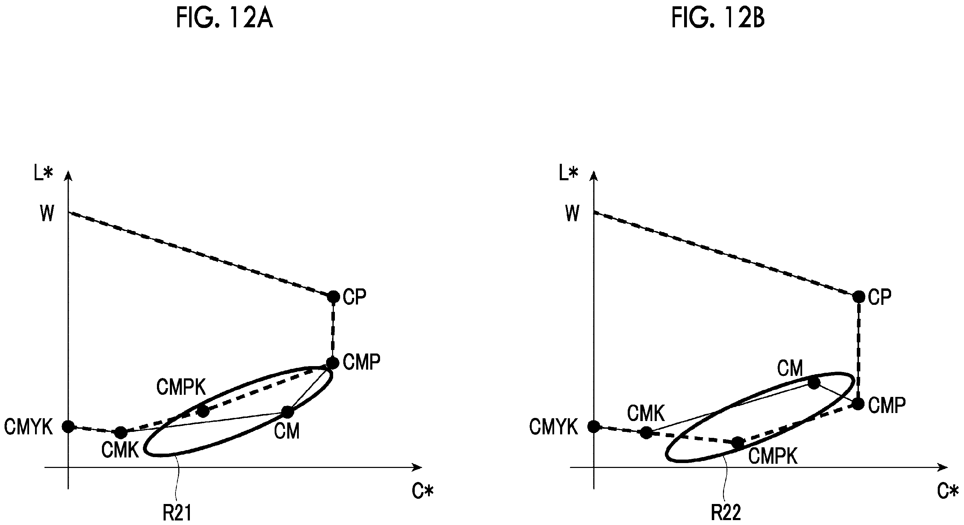

Figs. 12A and 12B are diagrams illustrating patch densities in the vicinity of the color gamut outline in a case where the special color toner is added to the base color toner.

Fig. 12A shows the color gamut outline in a case where the fluorescent pink toner is layered on the base color toner as the special color toner. In this case, for example, a patch is preferably finely taken in the region R21 in the vicinity of the outline. That is, for example, the colorimetry may be performed by using a chart in which the density of patches of a combination of colors that do not include the special color is set higher than the density of patches of a combination of colors that include the special color.

In this case, the image processing apparatus 10 is an example of a color processing system that controls to output a color sample corresponding to the toner information.

Further, the image processing apparatus 10 is an example of a color processing system that controls to output a color sample in which more colors in a region, which includes a point composed of a combination of colors that do not include the color of the special color toner and that include the color of the specific base color toner, are included in a case where both the first condition and the second condition are satisfied.

On the other hand, Fig. 12B shows the color gamut outline in a case where the fluorescent pink toner is layered under the base color toner as the special color toner. In this case, for example, a patch is preferably finely taken in a region R22 in the vicinity of the outline. That is, for example, the colorimetry may be performed by using a chart in which the density of patches of a combination of colors that include the special color is set higher than the density of patches of a combination of colors that do not include the special color.

Even in a case where the special color toner is not the fluorescent toner, the concept of Fig. 12B may be applied.

In this case, the image processing apparatus 10 is an example of a color processing system that controls to output a color sample corresponding to the toner information.

Further, the image processing apparatus 10 is an example of a color processing system that controls to output a color sample in which more colors in a region, which includes a point composed of a combination of colors that include the color of the special color toner and the color of the specific base color toner, are included in a case where at least one of the first condition or the second condition is not satisfied.

### [Effects of Present Exemplary Embodiment]

In the present exemplary embodiment, the color gamut is created such that the vertex of the outline of the dark portion is switched based on information on the type of the special color toner and information on the printing order. Accordingly, an appropriate color gamut is generated as a color gamut in a case where the fluorescent toner is used as the special color toner.

Further, in the present exemplary embodiment, an appropriate color gamut is generated in a short time because of the low calculation load as compared with the method of searching for a combination of the base colors and the special colors that have the same hue and maximum chroma and of adopting the combination in a case where a case using the special color is on the outer side.

### [Processor]

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Program]

The process performed by the color gamut creation unit 50 in the present exemplary embodiment is prepared as, for example, programs such as application software.

In this case, a first program that implements the present exemplary embodiment can be regarded as a program that causes a computer to implement: a function of acquiring toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and a function of generating a color gamut, which is composed of the base color toner and the special color toner, by using a vertex of an outline of the color gamut corresponding to the toner information.

Further, a second program that implements the present exemplary embodiment can be regarded as a program that causes a computer to implement: a function of acquiring information indicating whether or not a first condition, in which a special color toner to be added to a base color toner is a fluorescent toner, is satisfied and information indicating whether or not a second condition, which is related to a printing order of the base color toner and the special color toner with respect to a recording medium on which an image is formed, is satisfied; and a function of reproducing a first color in a case where both the first condition and the second condition are satisfied and reproducing a second color, which is different from the first color, in a case where at least one of the first condition or the second condition is not satisfied, based on a specific color signal.

Further, a program for implementing the present exemplary embodiment may be provided not only by a communication method but also by being stored in a recording medium such as a CD-ROM.

### Supplementary Notes

### (((1)))

A color processing system comprising:
one or a plurality of processors configured to:
acquire toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and
generate a color gamut, which is composed of the base color toner and the special color toner, by using a vertex of an outline of the color gamut corresponding to the toner information.

### (((2)))

The color processing system according to (((1))),
wherein the vertex corresponding to the toner information is the vertex of an outline in a dark portion of the color gamut.

### (((3)))

The color processing system according to (((1))) or (((2))),
wherein the second condition is a condition in which the special color toner is overprinted with respect to a specific base color toner that is the base color toner having a color of hue adjacent to hue of the special color toner.

### (((4)))

The color processing system according to (((3))),
wherein the vertex corresponding to the toner information
is the vertex composed of a combination of colors that do not include a color of the special color toner and that include a color of the specific base color toner, in a case where both the first condition and the second condition are satisfied, and
is the vertex composed of a combination of colors that include the color of the special color toner and the color of the specific base color toner, in a case where at least one of the first condition or the second condition is not satisfied.

### (((5)))

The color processing system according to (((3))) or (((4))), wherein the one or the plurality of processors are configured to:
acquire colorimetric data of a color sample composed of the base color toner and the special color toner, as the toner information.

### (((6)))

The color processing system according to (((5))), wherein the one or the plurality of processors are configured to:
acquire the colorimetric data, of which brightness is increased as an amount of the special color toner is increased, as the toner information indicating that both the first condition and the second condition are satisfied.

### (((7)))

The color processing system according to any one of (((3))) to (((6))), wherein the one or the plurality of processors are configured to:
perform color gamut compression from another color gamut to the color gamut; and
create a color conversion profile according to a creation condition corresponding to the toner information by using a result of the color gamut compression.

### (((8)))

The color processing system according to (((7))),
wherein the creation condition corresponding to the toner information
is a condition in which an amount of the special color toner, which is used to reproduce a color of a point composed of a combination of colors that include a color of the special color toner and a color of the specific base color toner, is minimum, in a case where both the first condition and the second condition are satisfied, and
is a condition in which an amount of the special color toner, which is used to reproduce a color of a point composed of a combination of colors that do not include the color of the special color toner and that include the color of the specific base color toner, is maximum, in a case where at least one of the first condition or the second condition is not satisfied.

### (((9)))

The color processing system according to any one of (((3))) to (((8))), wherein the one or the plurality of processors are configured to:
control to output a color sample corresponding to the toner information.

### (((10)))

The color processing system according to (((9))),
wherein the color sample corresponding to the toner information
is the color sample in which more colors in a region, which includes a point composed of a combination of colors that do not include a color of the special color toner and that include a color of the specific base color toner, are included, in a case where both the first condition and the second condition are satisfied, and
is the color sample in which more colors in a region, which includes a point composed of a combination of colors that include the color of the special color toner and the color of the specific base color toner, are included, in a case where at least one of the first condition or the second condition is not satisfied.

### (((11)))

A color processing system comprising:
one or a plurality of processors configured to:
acquire information indicating whether or not a first condition, in which a special color toner to be added to a base color toner is a fluorescent toner, is satisfied and information indicating whether or not a second condition, which is related to a printing order of the base color toner and the special color toner with respect to a recording medium on which an image is formed, is satisfied; and
reproduce a first color in a case where both the first condition and the second condition are satisfied and reproduce a second color, which is different from the first color, in a case where at least one of the first condition or the second condition is not satisfied, based on a specific color signal.

### (((12)))

A program that causes a computer to implement:
a function of acquiring toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and
a function of generating a color gamut, which is composed of the base color toner and the special color toner, by using a vertex of an outline of the color gamut corresponding to the toner information.

### (((13)))

A program that causes a computer to implement:
a function of acquiring information indicating whether or not a first condition, in which a special color toner to be added to a base color toner is a fluorescent toner, is satisfied and information indicating whether or not a second condition, which is related to a printing order of the base color toner and the special color toner with respect to a recording medium on which an image is formed, is satisfied; and
a function of reproducing a first color in a case where both the first condition and the second condition are satisfied and reproducing a second color, which is different from the first color, in a case where at least one of the first condition or the second condition is not satisfied, based on a specific color signal.

According to the exemplary embodiment of the invention (((1))), an appropriate color gamut can be generated as a color gamut composed of the base color toner and the special color toner, in a case where the fluorescent toner is used as the special color toner.

According to the exemplary embodiment of the invention (((2))), an appropriate vertex can be set as the vertex of the outline of the color gamut corresponding to the toner information.

According to the exemplary embodiment of the invention (((3))), a more appropriate color gamut can be generated as a color gamut composed of the base color toner and the special color toner, in a case where the fluorescent toner is used as the special color toner.

According to the exemplary embodiment of the invention (((4))), a more appropriate vertex can be set as the vertex of the outline of the color gamut corresponding to the toner information.

According to the exemplary embodiment of the invention (((5))), time and effort required to input the toner information can be reduced.

According to the exemplary embodiment of the invention (((6))), toner information can be easily acquired, which indicates that the special color toner is the fluorescent toner and is overprinted with respect to the specific base color toner.

According to the exemplary embodiment of the invention (((7))), a color conversion profile corresponding to the toner information can be created.

According to the exemplary embodiment of the invention (((8))), quality of the color conversion profile can be improved.

According to the exemplary embodiment of the invention (((9))), a color sample corresponding to the toner information can be output.

According to the exemplary embodiment of the invention (((10))), a color sample capable of efficiently improving the accuracy of the color conversion profile can be output.

According to the exemplary embodiment of the invention (((11))), appropriate color reproduction can be performed by using the base color toner and the special color toner in a case where the fluorescent toner is used as the special color toner.

According to the exemplary embodiment of the invention (((12))), an appropriate color gamut can be generated as a color gamut composed of the base color toner and the special color toner, in a case where the fluorescent toner is used as the special color toner.

According to the exemplary embodiment of the invention (((13))), appropriate color reproduction can be performed by using the base color toner and the special color toner in a case where the fluorescent toner is used as the special color toner.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image processing apparatus
30: image forming device
40: profile creation device
50: color gamut creation unit
51: toner information acquisition unit
52: color gamut vertex setting unit
53: color gamut outline calculation unit
54: colorimetric data acquisition unit
55: color conversion unit
60: color gamut compression unit
70: color separation unit

## Claims

1. A color processing system comprising:
one or a plurality of processors configured to:
acquire toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and
generate a color gamut, which is composed of the base color toner and the special color toner, by using a vertex of an outline of the color gamut corresponding to the toner information.

2. The color processing system according to claim 1,
wherein the vertex corresponding to the toner information is the vertex of an outline in a dark portion of the color gamut.

3. The color processing system according to claim 1 or 2,
wherein the second condition is a condition in which the special color toner is overprinted with respect to a specific base color toner that is the base color toner having a color of hue adjacent to hue of the special color toner.

4. The color processing system according to claim 3,
wherein the vertex corresponding to the toner information
is the vertex composed of a combination of colors that do not include a color of the special color toner and that include a color of the specific base color toner, in a case where both the first condition and the second condition are satisfied, and
is the vertex composed of a combination of colors that include the color of the special color toner and the color of the specific base color toner, in a case where at least one of the first condition or the second condition is not satisfied.

5. The color processing system according to claim 3 or 4, wherein the one or the plurality of processors are configured to:
acquire colorimetric data of a color sample composed of the base color toner and the special color toner, as the toner information.

6. The color processing system according to claim 5, wherein the one or the plurality of processors are configured to:
acquire the colorimetric data, of which brightness is increased as an amount of the special color toner is increased, as the toner information indicating that both the first condition and the second condition are satisfied.

7. The color processing system according to any one of claims 3 to 6, wherein the one or the plurality of processors are configured to:
perform color gamut compression from another color gamut to the color gamut; and
create a color conversion profile according to a creation condition corresponding to the toner information by using a result of the color gamut compression.

8. The color processing system according to claim 7,
wherein the creation condition corresponding to the toner information
is a condition in which an amount of the special color toner, which is used to reproduce a color of a point composed of a combination of colors that include a color of the special color toner and a color of the specific base color toner, is minimum, in a case where both the first condition and the second condition are satisfied, and
is a condition in which an amount of the special color toner, which is used to reproduce a color of a point composed of a combination of colors that do not include the color of the special color toner and that include the color of the specific base color toner, is maximum, in a case where at least one of the first condition or the second condition is not satisfied.

9. The color processing system according to any one of claims 3 to 8, wherein the one or the plurality of processors are configured to:
control to output a color sample corresponding to the toner information.

10. The color processing system according to claim 9,
wherein the color sample corresponding to the toner information
is the color sample in which more colors in a region, which includes a point composed of a combination of colors that do not include a color of the special color toner and that include a color of the specific base color toner, are included, in a case where both the first condition and the second condition are satisfied, and
is the color sample in which more colors in a region, which includes a point composed of a combination of colors that include the color of the special color toner and the color of the specific base color toner, are included, in a case where at least one of the first condition or the second condition is not satisfied.

11. A color processing system comprising:
one or a plurality of processors configured to:
acquire information indicating whether or not a first condition, in which a special color toner to be added to a base color toner is a fluorescent toner, is satisfied and information indicating whether or not a second condition, which is related to a printing order of the base color toner and the special color toner with respect to a recording medium on which an image is formed, is satisfied; and
reproduce a first color in a case where both the first condition and the second condition are satisfied and reproduce a second color, which is different from the first color, in a case where at least one of the first condition or the second condition is not satisfied, based on a specific color signal.

12. A program that causes a computer to implement:
a function of acquiring toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and
a function of generating a color gamut, which is composed of the base color toner and the special color toner, by using a vertex of an outline of the color gamut corresponding to the toner information.

13. A program that causes a computer to implement:
a function of acquiring information indicating whether or not a first condition, in which a special color toner to be added to a base color toner is a fluorescent toner, is satisfied and information indicating whether or not a second condition, which is related to a printing order of the base color toner and the special color toner with respect to a recording medium on which an image is formed, is satisfied; and
a function of reproducing a first color in a case where both the first condition and the second condition are satisfied and reproducing a second color, which is different from the first color, in a case where at least one of the first condition or the second condition is not satisfied, based on a specific color signal.

14. A color processing method comprising:
acquiring toner information indicating whether or not both a first condition, in which a special color toner to be added to a base color toner is a fluorescent toner, and a second condition, which is related to a printing order of the base color toner and the special color toner with respect to a recording medium on which an image is formed, are satisfied; and
generating a color gamut, which is composed of the base color toner and the special color toner, by using a vertex of an outline of the color gamut corresponding to the toner information.
